# EUROPEAN PATENT APPLICATION

(11) **EP 4 700 876 A1**
(43) Date of publication of application: **25.02.2026**
(21) Application number: 24894704.6
(22) Date of filing: 22.11.2024
(51) Int. Cl.: H01M 10/04, H01M 50/204, B65H 37/04

(54) **SHEET ATTACHMENT DEVICE**

(30) Priority: 24.11.2023 KR 20230165523
(71) Applicant: LG Energy Solution, Ltd., Seoul 07335 (KR)
(72) Inventor: KANG, Youngwoo, Daejeon 34122 (KR); KIM, Tae Wook, Daejeon 34122 (KR); JANG, Kyungsoo, Daejeon 34122 (KR); HAM, Jiwon, Daejeon 34122 (KR)
(74) Representative: Plasseraud IP
(86) International application number: PCT/KR2024/018692
(87) International publication number: WO 2025/110813

(57) **Abstract**

Provided is a sheet attachment device. A sheet attaching device according to an embodiment of the present invention comprises: a fixing unit in two parts configured so that both side regions of a blocking sheet are respectively placed thereon; and an elevating unit provided between the two parts of the fixing unit so that a central region of the blocking sheet is placed thereon. The elevating unit descends in response to the placement of a battery module, thereby guiding the folding of the blocking sheet so that the blocking sheet surrounds at least both sides of the battery module. Other embodiments are possible.

## Description

### Technical Field

The present disclosure relates to an apparatus for attaching a sheet. More specifically, the present disclosure relates to an apparatus for attaching a sheet for effectively attaching a flame retardant/insulating sheet on an outer peripheral surface of a battery module.

### Background Art

Lithium secondary batteries store and generate electrical energy by intercalation and deintercalation of lithium ions in positive electrodes and negative electrodes. The lithium secondary batteries are known for excellent storage capacity, voltage and lifespan and can be used in laptop computers, smart phones, as well as in electric vehicles.

Generally, lithium secondary batteries are often manufactured by connecting multiple battery cells that are electrically connected in series and/or parallel. In particular, the multiple battery cells may be electrically connected to each other and housed within a module case to form a battery module. Also, the battery module may be used alone or two or more of them may be electrically connected to each other in series and /or in parallel to constitute a higher-level device such as a battery pack.

However, when several battery modules are densely accommodated in a confined space to form a battery pack as described above, the battery pack may be vulnerable to fire. For example, a thermal propagation may occur in one battery module, and a situation in which a high-temperature gas is discharged from at least one battery cell may occur. In particular, when the thermal propagation occurs at a particular battery cell or a battery module, this may spread to surrounding battery cells or battery modules as well as other battery packs.

As one measure to prevent the spread of such a thermal propagation, conventionally a structure of covering an outer peripheral surface of a case of a battery module with a blocking sheet with flame retardant and insulation properties has been suggested. Such a blocking sheet may cover a surface of a battery module on which the thermal propagation occurs and both side surfaces adjacent thereto.

Conventionally, attachment of a blocking sheet has been performed by attaching the blocking sheet on an upper surface of a battery module using a zig for attaching the blocking sheet while the battery module is in an immobile state and folding both lateral parts of the blocking sheet to attach on both side surfaces of the battery module.

However, a problem of the blocking sheet not being properly attached to an edge of the battery module and being separated from the battery module occurs in the conventional sheet attaching scheme.

Also, such a separation of a blocking sheet has become one reason causing quality deterioration of a battery module.

### Detailed Description of the Invention

### Technical Goals

The present disclosure is intended to address at least some of the problems of the prior art by providing an apparatus for attaching a sheet to address a problem of a blocking sheet not being properly attached to an edge of a battery module.

In addition, the present disclosure is intended to provide an apparatus for attaching a sheet for improving quality of a battery module.

### Technical solutions

An apparatus for attaching a sheet according to an aspect of the present disclosure includes a fixing portion of which two parts are configured so that each of both side areas of a blocking sheet is seated, and a lifting portion which is provided between the two parts of the fixing portion and on which a center area of the blocking sheet is seated, wherein the lifting portion is configured to guide a folding of the blocking sheet to cover at least both side surfaces of a battery module by descending in response to the battery module being seated.

Through this, a problem of a blocking sheet not being properly attached to an edge of a battery module may be addressed.

Also, a quality of the battery module may be improved by addressing the problem of the separation of the blocking sheet.

In addition, two roller portions individually provided on the two parts of the fixing portion to face each other and configured to press the blocking sheet toward the battery module as the lifting portion descends may be further included.

The two roller portions may be provided with a gap smaller than a width of the battery module when the lifting portion has ascended and when the lifting portion descends, the two roller portions may be configured to move apart from each other to form a gap corresponding to the width of the battery module while elastically deforming outward by the battery module.

Each of the two roller portions may include a roller row that includes a base portion relatively fixed with respect to the fixing portion, a roller member configured to directly press the battery module and elastically move outward with respect to the base portion, and a supporting portion configured to connect the base portion and the roller member.

Each of the two roller portions may include a plurality of roller rows arranged in a vertical direction.

At least one of the plurality of roller rows may include a plurality of roller members which share an axis with each other.

One of the plurality of roller rows may include a plurality of roller members which form a gap between each other while sharing an axis with each other and another one of the plurality of roller rows may include at least one roller member which vertically overlaps with the gap.

A driving portion disposed below the lifting portion and a shaft configured to connect the lifting portion and the driving portion may be further included, and the lifting portion may ascend and descend electrically by an operation of the driving portion.

An elastic member disposed below the lifting portion may be further included and the lifting portion may ascend and descend according to a weight of the battery module.

The fixing portion may include at least one first fixing pin protruded from an upper surface of the fixing portion, disposed to correspond to a location of a fixing hole formed in the blocking sheet in an unfolded state, and configured to guide a position of the blocking sheet before the folding.

A location of the first fixing pin may be configured to be adjustable according to a size of the blocking sheet or the location of the fixing hole formed in the blocking sheet.

A portion between an upper surface of the first fixing pin and a surface of side surfaces of the fixing pin which is disposed far from the lifting portion may have a cut-off shape.

The lifting portion may include at least one second fixing pin protruded from an upper surface of the lifting portion and disposed to correspond to a location of a mounting hole formed in the battery module, and the mounting hole may be seated onto the second fixing pin when the battery module is seated onto the lifting portion.

### Effects of the Invention

According to the example aspects of an apparatus for attaching a sheet, a problem of a blocking sheet not being properly attached to an edge of a battery module may be addressed.

According to the example aspects, it is possible to improve a quality of a battery module by addressing a problem of separation of a blocking sheet.

### Brief Description of Drawings

FIG. 1 is a perspective view illustrating an apparatus for attaching a sheet, a battery module, and a blocking sheet according to an aspect of the present disclosure illustrating a state in which a lifting portion of the sheet attaching device is ascended.
FIG. 2 is a cross-sectional elevation view illustrating a state in which a lifting portion of an apparatus for attaching a sheet is ascended according to an aspect of the present disclosure.
FIG. 3 is a perspective view illustrating a state in which a lifting portion of an apparatus for attaching a sheet is descended according to an aspect of the present disclosure.
FIG. 4 is an enlarged view illustrating a part of an apparatus for attaching a sheet according to an aspect of the present disclosure.
FIG. 5 through 9 are cross-sectional elevation views illustrating a process of a blocking sheet being attached to a battery module by an apparatus for attaching a sheet according to an aspect of the present disclosure.

### Mode for Carrying Out the Invention

Before example aspects of the present disclosure are described, it is noted that terms or words used in the present disclosure and the accompanying claims are not to be limited to general definitions or dictionary definitions, and the terms and words are to be construed under the principle that an inventor may appropriately define a concept of a term in order to describe their disclosure in the best way. Thus, example aspects described in the present disclosure and configurations illustrated in the accompanying drawings may be the most desirable example aspects and do not represent all of the technical spirit of the present disclosure, and it should be understood that various equivalents and modifications that may replace the example aspects and configurations may be present at the time of filing the application of the present disclosure.

The same reference numerals or symbols shown in each drawing of this specification indicate parts or components that perform substantially the same function. For ease of explanation and understanding, different example aspects may be described using the same reference numerals or symbols. That is, even though components having the same reference numerals are shown in the plurality of drawings, the plurality of drawings do not mean one example aspect.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that these terms are not to exclude in advance a possibility that one or more other features, numbers, operations, actions, elements, components, or combinations thereof may be present or added.

Also, it should be noted in advance that expressions such as an upper side, an upper surface, a lower side, a lower surface, a side surface, a front surface, or a rear surface is based on directions illustrated in the drawings and that these expressions may change when a direction of a corresponding object changes.

In addition, in the present specification and claims, terms including ordinal numbers such as "first" or "second" may be used to distinguish between elements. These ordinal numbers are used to distinguish the same or similar components from each other, and the meaning of the term should not be limitedly interpreted due to the use of these ordinal numbers. As an example, elements combined with such ordinal numbers should not be construed as limiting the use order or arrangement order by the number. If necessary, each ordinal number may be used interchangeably.

Hereinafter, example aspects will be described with reference to the drawings. However, the spirit of the present disclosure is not limited to the presented example aspects. As an example, a person skilled in the art who understands the spirit of the present disclosure may suggest other example aspects that are included within the scope of the spirit of the present disclosure through addition, change, or deletion, however this is also considered to be included within the scope of the spirit of the present disclosure. The shape and size of elements in the drawings may be exaggerated for more clear description.

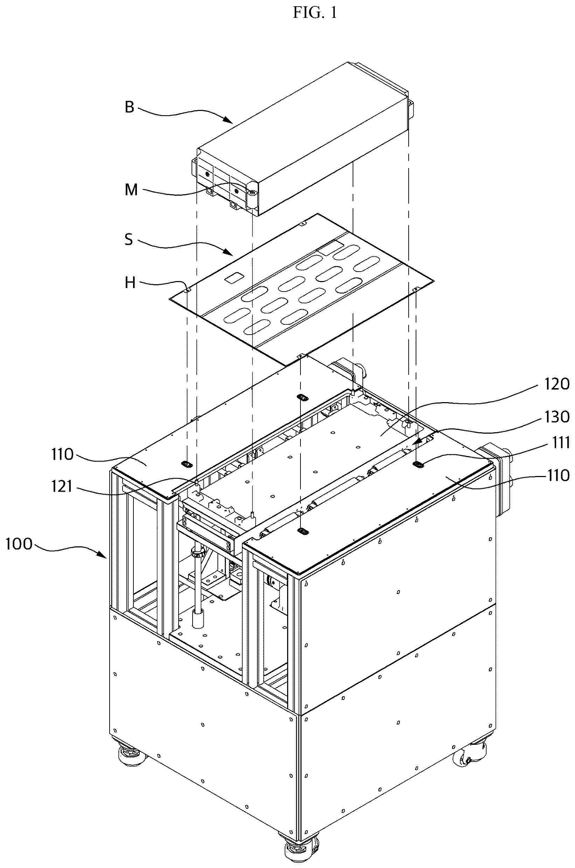

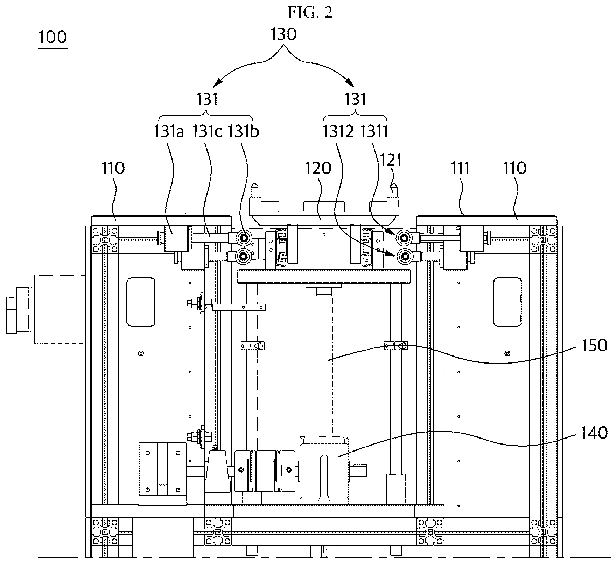

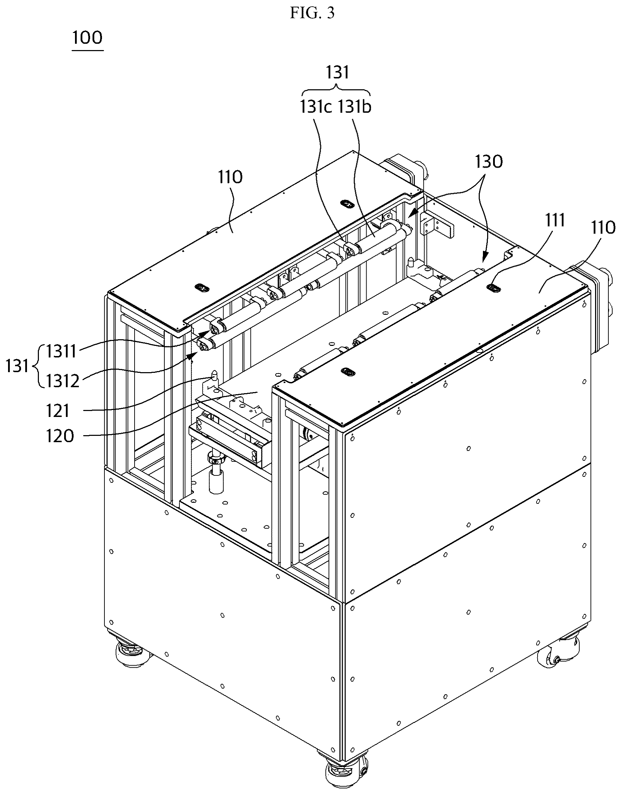

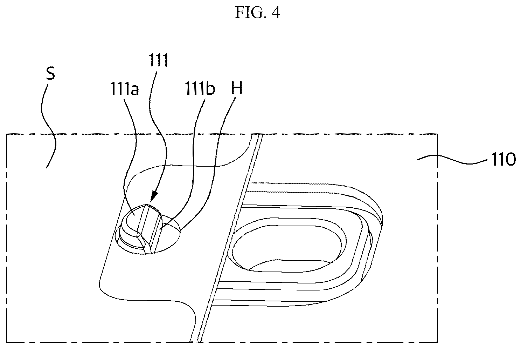

FIG. 1 is a perspective view illustrating an apparatus for attaching a sheet, a battery module, and a blocking sheet according to an example aspect of the present disclosure illustrating a state in which a lifting portion of the sheet attaching device is ascended. FIG. 2 is a cross-sectional view illustrating a state in which a lifting portion of an apparatus for attaching a sheet is ascended according to an example aspect of the present disclosure. FIG. 3 is a perspective view illustrating a state in which a lifting portion of an apparatus for attaching a sheet is descended according to an example aspect of the present disclosure. FIG. 4 is an enlarged view illustrating a part of an apparatus for attaching a sheet according to an example aspect of the present disclosure.

Hereinafter, a case in which a battery module B is seated onto an apparatus for attaching a sheet 100 in an upside-down position will be described as an example. This is because the apparatus for attaching the sheet 100 needs to surround an upper surface of the battery module B in which a venting hole is formed and both side surfaces adjacent thereto. However, without being limited thereto, in the case of the battery module B in which a lower venting occurs, the battery module B may be seated onto the apparatus for attaching the sheet 100 without being turned upside-down.

Hereinafter, based on FIG. 1, regardless of whether the battery module B is seated upside-down or seated without being turned upside-down (e.g., right-side-up), a surface located at a bottom side of the battery module B is referred to as a 'lower surface' of the battery module B and a surface located at an upper side of the battery module B is referred to as an 'upper surface' of the battery module B.

Referring to FIGS. 1 through 3, the apparatus for attaching the sheet 100 may include a fixing portion 110. The fixing portion 110 may be formed of two parts. The two parts of the fixing portion 110 may be individually disposed on both sides *(e.g.,* opposing sides) of a lifting portion 120. The fixing portion 110 may be a part fixed with respect to a vertical movement of the lifting portion 120. Both side areas *(e.g.,* opposing side areas) of a blocking sheet S may be individually seated onto the two parts of the fixing portion 110.

Referring to FIGS. 1 through 4, the fixing portion 110 may include at least one first fixing pin 111. A first fixing pin 111 may protrude or extend from an upper surface of the fixing portion 110. The first fixing pin 111 may be disposed to correspond to a location of a fixing hole H formed in the blocking sheet S while the blocking sheet S is in an unfolded state. For example, the fixing hole H of the blocking sheet S may be formed in an edge area of both sides (e.g., opposing sides) of the blocking sheet S, and the first fixing pin 111 may be provided at a location corresponding to the fixing hole H of the blocking sheet S at each of the two parts of the fixing portion 110. The fixing hole H of the blocking sheet S may be seated onto the first fixing pin 111. The first fixing pin 111 may guide a position of the blocking sheet S before the folding.

A location of the first fixing pin 111 may be adjustable according to a size of the blocking sheet S or a location of the fixing hole H formed in the blocking sheet S and may correspond to a shape and a size of the blocking sheet S or the battery module B. For example, the location of the fixing pin 111 may be adjusted in small increments in an anteroposterior direction or in both lateral directions. Due to variability of the location of the first fixing pin 111, versatility of the apparatus for attaching the sheet 100 may be expanded.

Referring to FIG. 4, the first fixing pin 111 may have an contoured shape that does not interfere with the fixing hole H of the blocking sheet when the blocking sheet S is being folded. For example, a cylindrical first fixing pin 111 may have a shape of which a portion between an upper surface 111a of the first fixing pin 111 and a surface 111b of side surfaces of the first fixing pin 111 which is disposed far from the lifting portion has a cut-off shape (e.g., a round or a chamfer shape). Accordingly, during a process of the fixing hole H of the blocking sheet S being separated from the first fixing pin 111 as the lifting portion 120 descends, the fixing hole H may be easily separated from the first fixing pin 111, and a problem of the blocking sheet S being torn or damaged may be prevented accordingly.

For a similar purpose, the fixing hole H of the blocking sheet S, by having an area greater than a space occupied by the first fixing pin 111, that is, a margin area, may minimize a possibility of interference between the first fixing pin 111 and the blocking sheet S.

Referring to FIGS. 1 through 3, the apparatus for attaching the sheet 100 may include the lifting portion 120. The lifting portion 120 may be provided between the two parts of the fixing portion 110. In a state in which the lifting portion 120 is ascended, a height of an upper surface of the lifting portion 120 may correspond to a height of an upper surface of the fixing portion 110. Through this, when the blocking sheet S is initially seated onto the lifting portion 120 and the fixing portion 110, the blocking sheet S may be seated in completely unfolded state without being creased. However, without being limited thereto, according to an unfolded shape of the blocking sheet S, the height of the upper surface of the lifting portion 120 and the height of the upper surface of the fixing portion 110 may be different when the lifting portion 120 is ascended.

The lifting portion 120 may perform a vertical movement with respect to the fixing portion 110. The lifting portion 120 may descend in response to the battery module B being seated. The lifting portion 120 may guide the folding of the blocking sheet S to cover at least both side surfaces of the battery module B through the vertical movement. A process of attaching the blocking sheet S according to the vertical movement of the lifting portion 120 will be described in detail below with reference to FIGS. 4 through 7.

A center area of the blocking sheet S may be seated onto the lifting portion 120. Specifically, before the blocking sheet S is attached to the battery module B, the blocking sheet S may be in an unfolded state across the fixing portion 110 with the two parts and the lifting portion 120. When the blocking sheet S is seated onto the apparatus for attaching the sheet 100 in this state, the center area of the blocking sheet S may be disposed on the lifting portion 120 and both side areas *(e.g.,* the opposing side areas) thereof may be individually disposed on the two parts of the fixing portion 110.

The lifting portion 120 may include at least one second fixing pin 121. A second fixing pin 121 may be protruded from the upper surface of the lifting portion 120. The second fixing pin 121 may be disposed to correspond to a location of a mounting hole M formed in the battery module B. For example, the mounting hole M of the battery module B may be formed at four vertex areas of the battery module B in a vertical direction, and the second fixing pin 121 may be formed at four vertex areas of the lifting portion 120 in response. When the battery module B is being seated onto the lifting portion 120, the mounting hole M of the battery module B may be seated onto the second fixing pin 121. The second fixing pin 121 may guide a seating location of the battery module B. Through this, an operator may be able to place the battery module B on a proper location without much effort.

The apparatus for attaching the sheet 100 may include a roller portion 130. The roller portion 130 may be disposed to correspond to each of the two parts of the fixing portion 110. Two roller portions 130 may be provided to face each other and press the blocking sheet S towards the battery module B.

When the lifting portion 120 has ascended, the two roller portions 130 may be provided with a gap smaller than a width of the battery module B. Also, as the lifting portion 120 descends, the two roller portions 130 may move apart from each other to form a gap corresponding approximately to the width of the battery module B while elastically deforming outward by the battery module B. An elastic deformation of the two roller portions 130 may be achieved through an elastic movement of a roller member 131b. This will be described later with reference to the roller member 131b.

Referring to FIGS. 2 and 3, each of the two roller portions 130 may include a roller row 131. The roller row 131 may be provided in plurality. For instance, a plurality of roller rows 131 may be arranged in a vertical direction at each roller portion 130. For example, referring to FIGS. 2 through 4, the plurality of roller rows 131 may include a first roller row 1311 and a second roller row 1312 which are arranged vertically. An attachment of the blocking sheet S may be performed effectively as the roller row 131 is provided in plurality and the blocking sheet S may be pressed towards the battery module B repeatedly.

However, it is not limited thereto and only one roller row 131 may be provided if the blocking sheet S can be properly attached to the battery module B with only one roller row 131. Also, three or more rows of the roller row 131 may be provided to ensure better attachment of the blocking sheet S.

Referring to FIG. 2, each roller row 131 may include a base portion 131a. The base portion 131a may be a relatively fixed part with respect to the fixing portion 110. The base portion 131a may be fixed below the upper surface of the fixing portion 110.

Each roller row 131 may include the roller member 131b. The roller member 131b may pivot around an axis extended in an anteroposterior direction. The roller member 131b may be a part that directly presses the blocking sheet S toward the battery module B. As the roller member 131b is configured to rotate, the battery module B may ascend or descend smoothly even while being pressed by the roller member 131b.

The roller member 131b may elastically move in an outward direction with respect to the base portion 131a. Specifically, the roller member 131b may be pushed and elastically moved outward by the battery module B as the battery module B descends. Here, the roller member 131b may effectively press the blocking sheet S toward the battery module B as an elastic restoring force *(e.g.,* a biasing force) acting towards the battery module B acts consistently. The roller member 131b may return to an original position by the elastic restoring force when the battery module B has completely descended or ascended and is not being pressed by the roller member 131b.

Each roller row 131 may include a supporting portion 131c connecting the base portion 131a and the roller member 131b. The supporting portion 131c may be provided to pass through the base portion 131a in a lateral direction. The supporting portion 131c may slide with respect to the base portion 131a. A separate elastic member (not illustrated) may be provided between the base portion 131a and the supporting portion 131c and such an elastic member may provide an elasticity acting in an inward direction to the supporting portion 131c as the supporting portion 131c slides in an outward direction with respect to the base portion 131a.

At least one of a plurality of roller rows 131 may include a plurality of roller members 131b sharing an axis with each other. For example, referring to FIG. 3, the first roller row 1311 may be provided so that three roller members 131b share an axis with each other, and the second roller row 1312 may be provided so that two roller members 131b share an axis with each other.

Specifically, the supporting portion 131c supporting the roller member 131b may be connected to both end portions of the roller member 131b due to a rotating structure of the roller member 131b, and the elastic restoring force of the roller member 131b may be forwarded through the supporting portion 131c. When each roller row 131 is formed to be one long roller member 131b, as a middle area of the roller member 131b is not supported by the supporting portion 131c, the elastic restoring force of the roller member 131b may be forwarded to the middle area, and the blocking sheet S in an area corresponding to the middle area of the roller member 131b may not be attached to the battery module B properly. However, according to an example aspect of the present disclosure, when each roller row 131 is formed with a plurality of roller members 131b, a shortened roller member 131b receives a force by the supporting portion 131c individually and thus may address a problem of the middle area of the roller member 131b not being able to press the blocking sheet S toward the battery module B sufficiently.

However, it is not limited thereto and when a sufficient elastic restoring force can be supplied across an entire area of the roller member 131b from the supporting portion 131c connected to both (e.g., opposing) end portions of the roller member 131b as the roller member 131b has high rigidity, each roller row 131 may be formed with one roller member 131b.

A gap formed by the plurality of roller members 131b forming one roller row 131 may vertically overlap with at least one roller member forming another roller row 131. For example, referring to FIG. 3, a gap formed by three roller members 131b forming the first roller row 1311 may vertically overlap with two roller members 131b forming the second roller member 1312. Through this, the attachment of the blocking sheet S performed incompletely at a gap formed at one roller row 131 may be completed by the roller member 131b of another roller row 131.

Referring to FIG.2, the apparatus for attaching the sheet 100 may include a driving portion 140. The driving portion 140 may be disposed below the lifting portion 120. The driving portion 140 may be configured to provide ascending and descending force to the lifting portion 120. The driving portion 140 may be formed as an electric device such as a motor. The lifting portion 120 may ascend and descend electrically by an operation of the driving portion 140. However, it is not limited thereto and it may be formed as a device operating using a mechanical mechanism such as a hydraulic cylinder or an air cylinder.

The apparatus for attaching the sheet 100 according to an example aspect of the present disclosure may include a shaft 150. The shaft 150 may connect the lifting portion 120 to the driving portion 140. The shaft 150 may forward the ascending and descending force generated at the driving portion 140 to the lifting portion 120.

In this case, the lifting portion 120 may be lowered when an operator starts a descending motion of the lifting portion 120 after disposing the battery module B onto the lifting portion 120 on which the blocking sheet S is seated. In addition, when the operator starts an ascending motion of the lifting portion 120 from a descending position of the lifting portion 120, the lifting portion 120 may ascend. Descending and/or ascending motion of the lifting portion 120 may be performed through a button provided at one part of the apparatus for attaching the sheet 100.

On the other hand, the apparatus for attaching the sheet 100 may include an elastic member (not illustrated). The elastic member (not illustrated) may be disposed below the lifting portion 120. The lifting portion 120 may ascend or descend according to a weight of the battery module B. In this case, when the operator places the battery module B onto the lifting portion 120, the lifting portion 120 may descend by the weight of the battery module B. The lifting portion 120 may ascend again when the operator lifts up the battery module B again after the lifting portion 120 has descended to a target point, and here, the operator may be able to easily lift up the battery module B with the help of the elasticity of the elastic member (not illustrated).

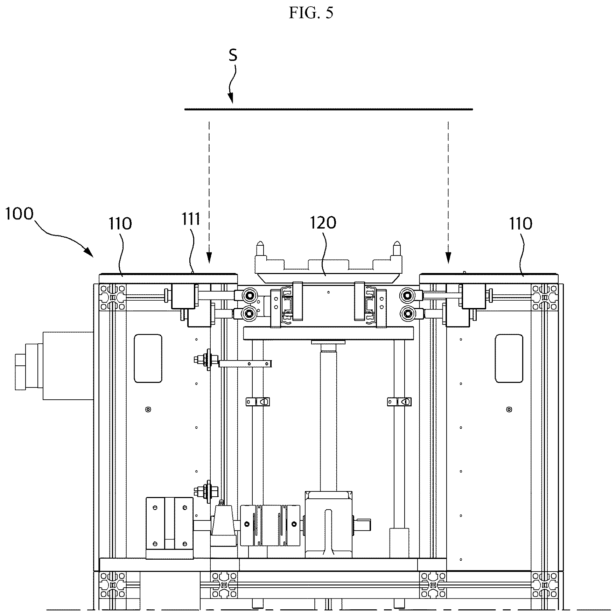

FIGS. 5 through 8 are cross-sectional elevation views illustrating a process of a blocking sheet being attached to a battery module using an apparatus for attaching a sheet according to an example aspect of the present disclosure.

Referring to FIG. 5, the blocking sheet S may be disposed on the apparatus for attaching the sheet 100. At this stage, the lifting portion 120 may be at a height at which the upper surface of the lifting portion 120 corresponds to a height of the upper surface of the fixing portion 110. The center area of the blocking sheet S may be seated onto the lifting portion 120, and both side areas of the blocking sheet S may be seated onto the two parts of the fixing portion 110. Here, as the fixing hole H (illustrated in FIG. 1 and 4) formed in the blocking sheet S is seated onto the first fixing pin 111 which is protruded from the upper surface of the fixing portion 110, a location of the blocking sheet S may be guided.

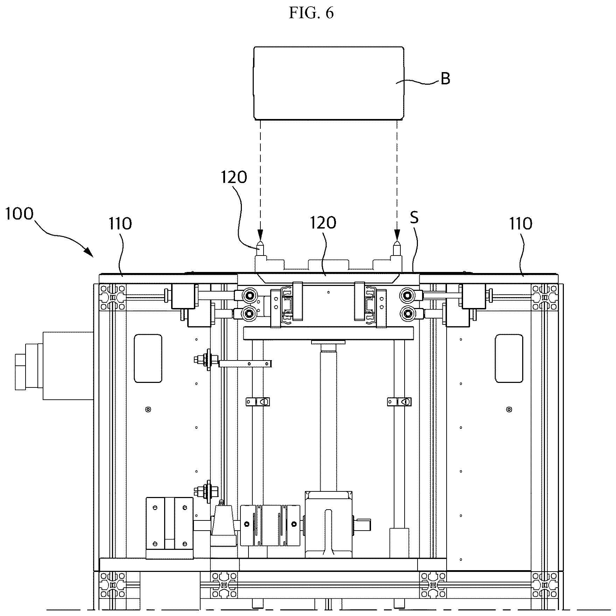

Referring to FIG. 6, while in a state in which the blocking sheet S is seated onto the apparatus for attaching the sheet 100, the battery module B may be seated onto the blocking sheet S at a location corresponding to a location of the lifting portion 120. Here, a location of the battery module B may be guided as the mounting hole M (illustrated in FIG. 1) provided in the battery module B may be inserted into the second fixing pin 121 protruding or extending from the lifting portion 120. Regarding the battery module B, a surface in contact with the blocking sheet S may be attached to the blocking sheet S due to the weight of the battery module B.

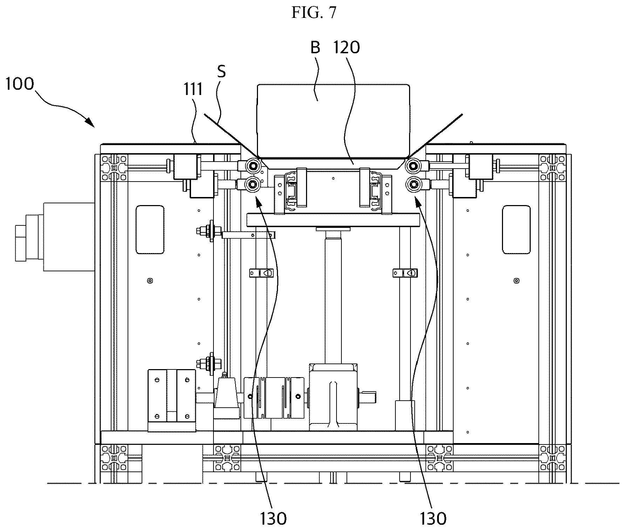

Referring to FIG. 7, as the operator starts descending movement of the lifting portion 120, the battery module B and a center area of the blocking sheet S may descend along with the lifting portion. At this stage, the fixing hole H of the blocking sheet S may be separated from the first fixing pin 111 as the both side surfaces of the blocking sheet S folds toward an upper portion.

The two roller portions 130 and the blocking sheet S may be in contact as the lifting portion 120 descends. From a point of time the roller portion 130 and the blocking sheet S be in contact, the roller portion 130 may start pressing the blocking sheet S toward an edge of the battery module B. Through this, the blocking sheet S may be pressed against and attached to the edge of the battery module B by the roller portion 130. Up to this stage, a gap between the two roller portions 130 may be smaller than a width of the battery module B.

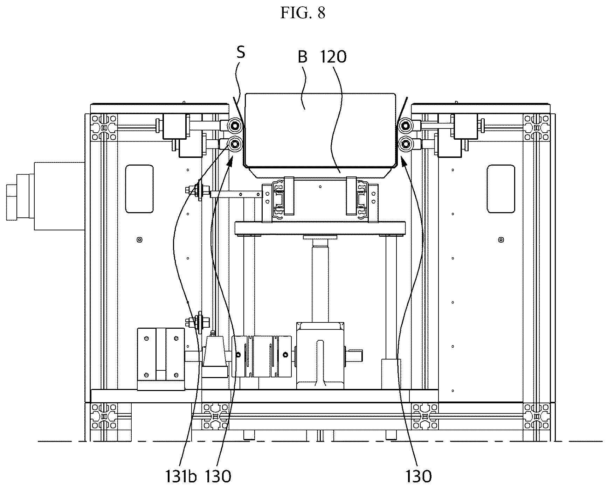

Referring to FIG. 8, as the lifting portion 120 descends further, the battery module B may be disposed between the two roller portions 130. The roller portion 130 may press the blocking sheet towards a side surface of the battery module B.

Specifically, as the two roller portions 130 are pushed outward by the battery module B, a gap between the two roller portions 130 may be widened to correspond to the width of the battery module B. More specifically, the battery module B may descend, after the edge being in contact with the roller member 131b forming each of the two roller portions 130, as the side surface of the battery module B slides against the roller member 131b. Here, the two roller portions 130 may move apart from each other and form a gap corresponding to the width of the battery module B as the roller member 131b elastically moves outward. Since the elastic restoring force is acting inward consistently to the roller member 131b, the two roller portions 130 may press the blocking sheet S against the battery module B consistently while the battery module is descending.

Accordingly, since the two roller portions 130 consistently press the battery module B from the edge to the side surface of the battery module B, the blocking sheet S disposed between the two roller portions 130 and the battery module B may be pressed consistently toward the battery module B from the edge to the side surfaces of the battery module B. Through this, the problem of the blocking sheet S being separated (that is, falling off) from the edge of the battery module B may be addressed, thereby improve a quality of the battery module B.

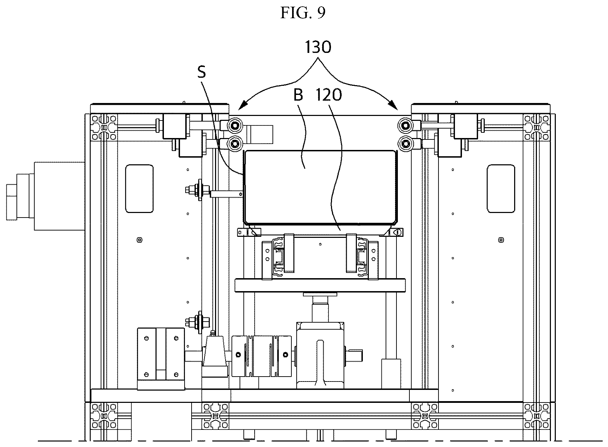

Referring to FIG. 9, the lifting portion 120 may descend until at least a portion of the two roller portions 130 reaches a position higher than the upper surface of the battery module B. Thus, the blocking sheet S may be attached primarily to the battery module B across a lower surface, an edge, and a side surface of the battery module B.

Then, when the operator resumes the ascending motion of the lifting portion 120, the two roller portions 130 may press the blocking sheet S towards the battery module B once more, and the blocking sheet S may be pressed against the side surface and the edge of the battery module B for the second time.

The attachment of the blocking sheet S to the battery module B may be completed by going through the above process, however, to ensure proper attachment of the blocking sheet S, the process shown in FIGS. 7 through 9 and a process in reverse order may be performed repeatedly.

Example aspects of the present disclosure described above or other example aspects are not mutually exclusive or distinct from each other. Configurations or functions of example aspects of the present disclosure or other example aspects described above may be used together or combined with each other.

For example, a configuration "A" described in one example aspect and/or drawing may be combined with configuration "B" described in another example aspect and/or drawing. That is, although the combination between the configurations is not directly described, the combination is possible except in the case where it is described that the combination is impossible.

The detailed description is not to be construed as being limitative, but is to be construed as being illustrative in all aspects. The scope of the present disclosure is to be determined by reasonable analysis of accompanying claims, and all changes within the equivalent range of the present disclosure are included in the scope of the present disclosure.

## Claims

1. An apparatus for attaching a sheet, the apparatus comprising:
a fixing portion including two parts which are configured to contact each of two side areas of a blocking sheet; and
a lifting portion included between the two parts of the fixing portion and configured to contact a center area of the blocking sheet,
wherein the lifting portion is configured to descend upon contacting the battery module to guide a folding of the blocking sheet to cover at least two side surfaces of the battery module.

2. The apparatus of claim 1, further comprising two roller portions individually included on the two parts of the fixing portion facing each other and configured to press the blocking sheet towards the battery module as the lifting portion descends.

3. The apparatus of claim 2, wherein the two roller portions define a gap
therebetween smaller than a width of the battery module when the lifting portion has ascended, and
when the lifting portion descends, the two roller portions are configured to move apart from each other to form a gap corresponding to the width of the battery module while being elastically deformed in an outward direction by the battery module.

4. The apparatus of claim 3, wherein each of the two roller portions comprises a roller row that comprises:
a base portion fixed with respect to the fixing portion;
a roller member configured to directly press the battery module and elastically move outward with respect to the base portion; and
a supporting portion configured to connect the base portion and the roller member.

5. The apparatus of claim 2, wherein each of the two roller portions comprises a plurality of roller rows arranged in a vertical direction.

6. The apparatus of claim 5, wherein at least one of the plurality of roller rows comprises a plurality of roller members which share an axis with each other.

7. The apparatus of claim 5, wherein one of the plurality of roller rows comprises a plurality of roller members which form a gap therebetween while sharing an axis with each other, and
another one of the plurality of roller rows comprises at least one roller member which vertically overlaps with the gap.

8. The apparatus of claim 1, further comprising:
a driving portion disposed below the lifting portion; and
a shaft coupling the lifting portion and the driving portion,
wherein the lifting portion is configured to ascend and descend electrically by an operation of the driving portion.

9. The apparatus of claim 1, further comprising an elastic member disposed below the lifting portion,
wherein the lifting portion is configured to ascend and descend according to a weight of the battery module.

10. The apparatus of claim 1, wherein the fixing portion comprises at least a first fixing pin extending from an upper surface of the fixing portion, disposed to correspond to a location of a fixing hole formed in the blocking sheet in an unfolded state, and configured to guide a position of the blocking sheet before the folding of the blocking sheet.

11. The apparatus of claim 10, wherein a location of the first fixing pin is configured to be adjustable according to a size of the blocking sheet or the location of the fixing hole formed in the blocking sheet.

12. The apparatus of claim 10, wherein a portion between an upper surface of the first fixing pin and a side surface of the fixing pin which is disposed far from the lifting portion has a cut-off shape.

13. The apparatus of claim 1, wherein the lifting portion comprises at least one second fixing pin extending from an upper surface of the lifting portion and disposed to correspond to a location of a mounting hole formed in the battery module, and
the mounting hole is positioned onto the second fixing pin when the battery module is seated onto the lifting portion.
